# EUROPEAN PATENT SPECIFICATION

(11) **EP 2 757 533 B1**
(45) Date of publication and mention of the grant of the patent: **24.02.2021**
(21) Application number: 14151279.8
(22) Date of filing: 15.01.2014
(51) Int. Cl.: G07C 5/00, G07C 5/08, G06Q 10/00

(54) **System and method for tracking driving hours online with electronic signature**
System und Verfahren zur Online-Verfolgung von Fahrstunden mit elektronischer Signatur
Système et procédé de suivi en ligne des heures de conduite avec signature électronique

(30) Priority: 18.01.2013 TR 201300672
(43) Date of publication of application: 23.07.2014
(73) Proprietor: Aselsan Elektronik Sanayi ve Ticaret Anonim Sirketi, 06370 Ankara (TR)
(72) Inventor: Colak, Mehmet, 06370 Ankara (TR)
(74) Representative: Yamankaradeniz, Kemal

(56) References cited:
- EP-A1- 2 423 885
- WO-A1-2012/080741
- US-A1- 2010 070 349
- US-A1- 2011 125 365
- US-A1- 2012 246 039

## Description

### Field of the Invention

The present invention relates to tracking driving hours and rest periods of professional drivers by using electronic signature, GPS, GPRS and GSM technologies.

### Background of the Invention

The European social legislation "Regulation (EC) No 561/2006 of the European Parliament and of the Council of 15 March 2006" mandates maximum driving and minimum rest periods for the drivers of the motor vehicles which are used for professional carriage of goods and whose mass exceeds 3.5 tonnes, and of the motor vehicles which are used for professional carriage of passengers having a capacity of at least nine passengers.

According to the Regulation which is prepared with the purpose of establishing acceptable social standards, enhancing road security and providing a fair competition environment between the transportation companies, daily driving period should not exceed nine hours and weekly driving period should not exceed fifty six hours. Furthermore, after a four and a half hours of uninterrupted driving period, a break of forty five minutes should be taken for resting.

Annex 1B of "Council Regulation (EEC) No 3821/85 of 20 December 1985 on recording equipment in road transport" (Digital Tachograph regulation) defines the "Digital Tachograph System" used for tracking driving and rest periods of professional drivers. This system is developed to apply the European Union social legislation on road transport. The basic security purpose of the digital tachograph system is to ensure that the data that the control authorities will control are accessible and exactly and accurately reflect the activities of the drivers and vehicles that are controlled in terms of driving, working, readiness and rest periods and vehicle speed. Therefore, the Digital Tachograph System is comprised of a vehicle unit (VU), motion sensor, smart cards and three level PKI infrastructure (Public Key Infrastructure) and other actors (ref. Digital Tachograph System European Root Policy Version 2.1) to record the driver activity data in a reliable way and provide it to the control authorities.

The motion sensor is paired with the vehicle unit at the tachograph workshop and provides the motion data to the vehicle unit securely. The drivers are introduced to the vehicle unit by means of the digital tachograph driver cards. Driver identification information, driving and rest periods, vehicle identification number and speed information are recorded in the digital tachograph vehicle unit and digital tachograph driver card. The police, when necessary, stops the vehicle, downloads and analyzes the data on the driver card and vehicle unit, and checks whether the driver obeys the concerned rules.

The user (driver, police, workshop and company) smart cards are provided to the users by the card issuing authorities of the countries which are enforcing the digital tachograph system.

DT Regulation is enforced in 52 countries including the European Union countries and AETR (European Agreement Concerning the Work of Crews of Vehicles Engaged in International Road Transport) countries.

DT Regulation is updated 10 times since 1985, when it was first enacted, up till today depending on the technological developments, and the last update is the Regulation EU 1266/2009. The most significant requirement desired by the DT Regulation is to ensure authenticity and integrity of the recorded information.

DT Regulation Annex 1B Appendix 10 specifies the security level (ITSEC E3 High) that must be ensured for the Digital Tachograph security mechanisms and Appendix 11 defines the related protocols. The related protocols (mutual authentication mechanism, secure messaging, digital signature) ensured the target security level at the date that the appendixes were written; but today, the target security level cannot be provided because of the increase in the processing power parallel to the technological developments. Thus an inconsistency arised between Appendix 10 and Appendix 11. The most important factor in the ongoing update of the Digital Tachograph regulation is the effort for eliminating this inconsistency.

As the cryptographic security algorithms used in the digital tachograph system are realized as embedded and fixed, cryptographic updates take long time. Since it operates offline, some Public Key Cryptography mechanisms such as certificate revocation control cannot be applied.

There are fleet management systems in the market which employ more recent technologies than the Digital Tachograph System defined by the DT Regulation. GPS, GPRS and GSM technologies are currently used for tracking vehicles or drivers.

Driving hours, speed and location information can be monitored online via the commercially available tracking systems. However, the Regulation obliges use of the Digital Tachograph System. Enabling driver authentication by introducing the drivers to the Digital Tachograph via the smart cards that they use, and the ability to download the data collected in the Digital Tachograph as electronically signed are factors that enhance data reliability in the digital tachograph system.

On the other hand, in the commercially available vehicle tracking systems user and data control with electronic signature technology is not used as of today. The closest prior art document numbered US20120246039A1 discloses a tracking and management system for automating at least one operation for managing a fleet of delivery trucks and drivers. The system comprising: a login screen to identify a user of a mobile device to a web application; a PIN field to prevent unauthorized access to the system; and a mobile display of performance metrics including hours worked and FMSCA hours of service. Still in the document, electronic signature technology is not used to provide integrity and authenticity to the data generated in the system.

### Summary of the Invention

An objective of the present invention is to provide a system and method for tracking driving hours online with electronic signature which enables to control the maximum driving hours and minimum rest periods that the drivers should obey in road transport by using electronic signature technology.

Another objective of the present invention is to provide a system and method for tracking driving hours online with electronic signature which enables to collect the legally valid data by means of the electronic signature technology employed in driver authentication and protection of data integrity.

A further objective of the present invention is to provide a system and method for tracking driving hours online with electronic signature which enables to make the digital tachograph system online and thus to make cryptographic updates easily and rapidly.

Another objective of the present invention is to provide a system and method for tracking driving hours online with electronic signature which enables to remote monitor and control the data saved to a central database.

A further objective of the present invention is to provide a system and method for tracking driving hours online with electronic signature which, by making the system online, enables to perform certificate revocation control and rendering the system more secure.

In order to achieve above mentioned objectives, the invention relates to a system for tracking driving hours online with electronic signature, which enables to control the maximum driving hours and minimum rest periods that the drivers must obey in road transport by using electronic signature technology providing driver authentication and ensuring data integrity, comprising
- at least one communication device having a user interface that is adapted to allow the user to log in and log out the system,
- at least one GPS receiver which is preferably provided in the vehicle or in the communication device and which is adapted to communicate with the GPS satellite and obtain the speed and location information of the vehicle,
- at least one GSM/GPRS unit which is provided in the communication device and the GPS receiver and which enables wireless transmission of the speed and location information obtained by means of the GPS₁ receiver at regular intervals,
- at least one server which enables to save the speed and location information received from the GPS receivers in a database and wherein
- the communication device is preferably a smart phone and has a SIM card on which electronic signature keys are created,
- the user interface enables to create electronically signed data that contains vehicle identification number, GPS receiver ID, GPS receiver location information, GSM time information, and indication that the driver has begun or ended driving activity,
- the GSM/GPRS unit enables wireless transmission of the electronically signed data to the server, and
- wherein the server compares the speed and location information received from the GPS receivers with the data received from the GSM/GPRS unit to verify data integrity and tracks driving times using verified information.

### Detailed Description of the Invention

The system and method for tracking driving hours online with electronic signature developed to fulfill the objectives of the present invention is illustrated in the accompanying figures, in which:

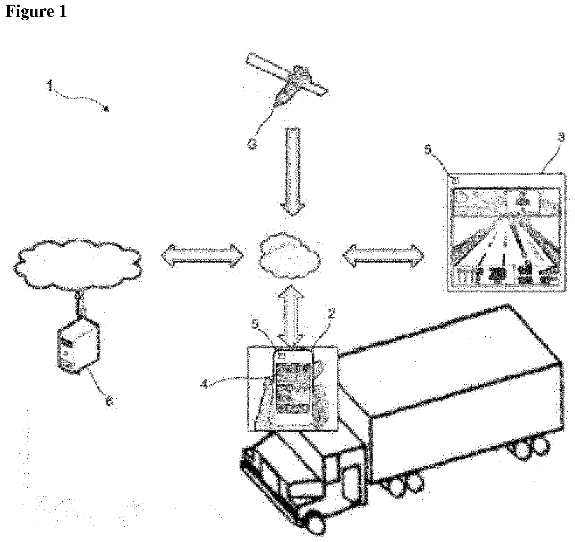

**Figure** 1 is the schematic view of the system for tracking driving hours online with electronic signature.

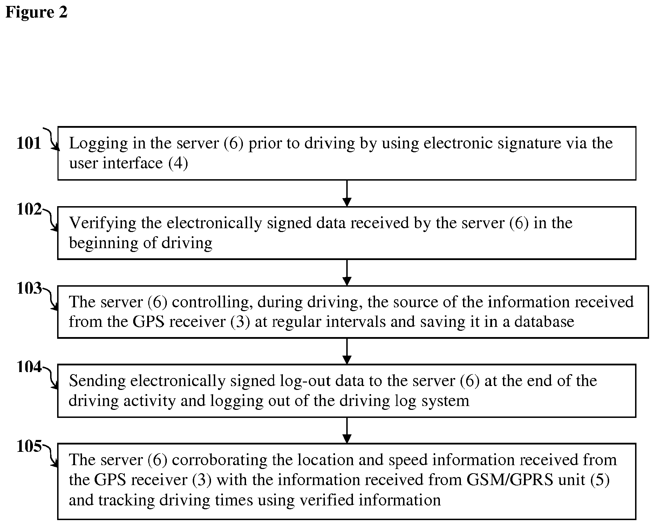

**Figure** 2 is the steps of the method for tracking driving hours online with electronic signature.

The components shown in the figures are each given reference numbers as follows:
**1.** System for tracking driving hours online with electronic signature.
**2.** Communication device
**3.** GPS receiver
**4.** User interface
**5.** GSM/GPRS unit
**6.** Server
**100.** Method for tracking driving hours online with electronic signature.
**G.** GPS satellite

A system for tracking driving hours online with electronic signature (1), which enables to control the maximum driving hours and minimum rest periods that the drivers must obey in road transport by employing electronic signature technology, basically comprises
- at least one communication device (2) which is preferably a smart phone and which has a SIM card on which electronic signature keys are created,
- at least one GPS receiver (3) which is preferably provided in the vehicle or the communication device (2) and which is adapted to communicate with the GPS satellite and obtain the speed and location information of the vehicle,
- at least one user interface (4) which is provided on the communication device (2) and which is adapted to allow the user to log in and log out the system in order to begin and end the driving activity by using electronic signature that preferably contains vehicle identification number, GPS receiver (3) ID, GSM time information, etc.
- at least one GSM/GPRS unit (5) which is provided in the communication device (2) and the GPS receiver (3) and which enables wireless transmission of the speed and location information obtained by means of the GPS receiver (3) and electronic signature created by means of the user interface (4),
- at least one server (6) which enables to save the speed and location information received from the GPS receiver (3) in a database and to verify the information by comparing it with the electronically signed data received from the GSM/GPRS unit (5) of the communication device (2) and tracks driving times using verified information.

The system for tracking driving hours online with electronic signature (1) of the present invention enables the location and speed information received from the GPS receiver (3) and the electronically signed data that will be generated by means of the user interface (4) that is installed to the communication device (2) to be transmitted to a database on the server (6) by means of the GSM/GPRS unit (5) in order to enable control of the maximum driving hours and minimum rest periods that the drivers must obey; and enables this control to be carried out by the reports that will be generated from a database on the server (6). Thanks to the electronic signature technology used for driver authentication and ensuring data integrity, legally valid data which include driving and rest periods of the drivers are collected.

In a preferred embodiment of the invention, first of all, electronic signature keys are created on the SIM card in the communication device (2) of a driver by an authorized certification authority via the GSM operator channel. Then, the electronic signature certificate, which belongs to this driver and is created upon being signed by electronic signature of the country certification authority, is loaded to the communication device (2) of the said driver. The electronic certificate of the authorized certification authority contains the electronic signature of the European certification authority based on hierarchical public key infrastructure (PKI). Using a hierarchical public key infrastructure facilitates verification of the driver electronic signature certificate by the foreign country control authorities in international transportation. Since the country electronic certificate which signs the driver electronic certificate is signed by the European certification authority, it ensures trust of the foreign country control authority. The said electronic certificate includes the driver identification information and is aimed to serve electronic signature. The driver electronic signature certificate verification process is performed on the server (6). Additionally, the driver electronic signature certificate verification process also includes certificate revocation protocol and these revocation controls are also carried out on the server (6).

After this electronic signature certificate is loaded to the communication device (2) of the said driver, the user interface (4) and the cryptographic updates of the user interface (4) are downloaded from the server (6) and installed to the communication device (2).

A method for tracking driving hours online with electronic signature (100), which enables to control the maximum driving hours and minimum rest periods that the drivers must obey in road transport by using electronic signature technology, basically comprises the steps of
- logging in the server (6) prior to driving by using electronic signature via the user interface (4) (101),
- verifying the electronically signed data received by the server (6) in the beginning of driving (102),
- the server (6) controlling, during driving, the source of the information received from the GPS receiver (3) at regular intervals and saving it in a database (103),
- sending electronically signed log-out data to the server (6) at the end of the driving activity and logging out of the driving log system (104),
- the server (6) corroborating the location and speed information received from the GPS receiver (3) with the information received from GSM/GPRS unit (5) of the communication device (2) and tracking driving times using verified information (105).

In the method for tracking driving hours online with electronic signature (100), firstly when a driver who will be tracked by the server (6) is beginning to drive, s/he logs into the server (6) by using her/his electronic signature via the user interface (4) installed in her/his communication device (2) (101). This electronically signed data generated by means of the user interface (4) contains information such as vehicle identification number, GPS receiver (3) ID, GPS receiver (3) location information, GSM time information and indication that the driver has begun driving.

The said electronically signed data received by the server (6) is verified and driving activity begins (102) independent of verification. As soon as the driving activity begins, the GPS receiver (3) provided in the vehicle wirelessly transmits the location information, which it regularly receives from the GPS satellite (G), and the speed information, which it obtains by calculating the change of its location relative to time to the server (6) via the GSM/GPRS unit (5) (103). The server (6) verifies the source of the information received from the GPS receiver (3) and saves them into a database.

When driving ends, the driver sends an electronically signed log-out data to the server (6) (104). This log-out data contains information such as identity number of the vehicle driven by the driver, GPS receiver (3) ID, GPS receiver (3) location information, GSM time information and indication that driving has ended. When the said log-out data is verified by the server (6) the driver logs out of the driving log system.

After driving ends, the server (6) verifies the location and speed information, which are received from the GPS receiver (3) and saved into a database, by comparing them with the data received from the GSM/GPRS unit (5) of the communication device (2) and tracking driving times using verified information (105). Thus, thanks to verification of the information which are collected and saved into the database by the server (6), maximum driving and minimum rest periods that the drivers must obey can be monitored remotely, tracked and controlled by using electronic signature technology.

## Claims

1. A system for tracking driving hours online with electronic signature (1), which enables to control the maximum driving hours and minimum rest periods that the drivers must obey in road transport by using electronic signature technology providing driver authentication and ensuring data integrity, comprising
- at least one communication device (2) having a user interface (4) that is adapted to allow the user to log in and log out the system,
- at least one GPS receiver (3) which is preferably provided in the vehicle or in the communication device (2) and which is adapted to communicate with the GPS satellite and obtain the speed and location information of the vehicle,
- at least one GSM/GPRS unit (5) which is provided in the communication device (2) and the GPS receiver (3) and which enables wireless transmission of the speed and location information obtained by means of the GPS receiver (3) at regular intervals,
- at least one server (6) which enables to save the speed and location information received from the GPS receivers (3) in a database **and** wherein
- the communication device (2) has a SIM card on which electronic signature keys are created and is preferably a smart phone,
- the user interface (4) enables to create electronically signed data that contains vehicle identification number, GPS receiver (3) ID, GPS receiver (3) location information, GSM time information, and indication that the driver has begun or ended driving activity,
- the GSM/GPRS unit (5) enables wireless transmission of the electronically signed data to the server (6), and
- wherein the server (6) compares the speed and location information received from the GPS receivers (3) with the data received from the GSM/GPRS unit (5) to verify data integrity and tracks driving times using verified information.

2. A method for tracking driving hours online with electronic signature (100), which enables to control the maximum driving hours and minimum rest periods that the drivers should obey in road transport by employing electronic signature technology providing driver authentication and ensuring data integrity using the system of claim 1, **characterized by** the steps of
- logging in the server (6) prior to driving by using electronic signature via the user interface (4) (101),
- verifying the electronically signed data received by the server (6) in the beginning of driving (102), the electronically signed data contains vehicle identification number, GPS receiver (3) ID, GPS receiver (3) location information, GSM time information and indication that the driver has begun driving,
- the server (6) controlling, during driving, the source of the information comprising the location and speed information received from the GPS receiver (3) at regular intervals and saving it in a database (103),
- sending electronically signed log-out data to the server (6) at the end of the driving activity and logging out of the driving log system after verification of the electronically signed data on the server (104), and
- the server (6) corroborating the location and speed information received from the GPS receiver (3) with the information received from GSM/GPRS unit (5) of the communication device (2) to verify data integrity and tracking driving times using verified information (105).

3. A system for tracking driving hours online with electronic signature (1) according to Claim 1, wherein the server (6) performs verification of the electronic signature certificate and certificate revocation control.

4. A system for tracking driving hours online with electronic signature (1) according to Claim 1, wherein the GPS receiver (3) is adapted to wirelessly transmit, as soon as the driving activity begins, the location information, which it regularly receives from the GPS satellite (G), and the speed information, which it obtains by calculating the change of its location relative to time to the server (6) via the GSM/GPRS unit (5).

5. A system for tracking driving hours online with electronic signature (1) according to claim 1, wherein the cryptographic updates can easily be downloaded from the server (6) thanks to being online.

6. A system for tracking driving hours online with electronic signature (1) according to claim 1, wherein the server (6) corroborates the location information by comparing the location data received from the GPS receiver (3) with the location data received from the GSM/GPRS unit (5) of the communication device (2).

## Patentansprüche

1. System zur Verfolgung von Lenkzeiten online mit einer elektronischen Signatur (1), welches eine Kontrolle der maximalen Lenkzeiten und der Mindestruhezeiten, die Fahrer, beim Transport auf der Straße einhalten müssen, unter Verwendung einer elektronischen Signaturtechnologie ermöglicht, die eine Authentifizierung von Fahrern bereitstellt und Datenintegrität gewährleistet, umfassend:
- mindestens eine Kommunikationsvorrichtung (2) mit einer Benutzeroberfläche (4), die es dem Benutzer ermöglicht, sich in dem System an- und aus diesem abzumelden;
- mindestens einen GPS-Empfänger (3), der vorzugsweise in dem Fahrzeug oder in der Kommunikationsvorrichtung (2) bereitgestellt ist, und der mit dem GPS-Satelliten kommunizieren und die Geschwindigkeits- und Standortinformationen des Fahrzeugs erhalten kann;
- mindestens eine GSM/GPRS-Einheit (5), die in der Kommunikationsvorrichtung (2) und dem GPS-Empfänger (3) bereitgestellt ist, und die eine drahtlose Übermittlung der durch den GPS-Empfänger (3) erhaltenen Geschwindigkeits- und Standortinformationen in regelmäßigen Intervallen ermöglicht;
- mindestens einen Server (6), der es ermöglicht, die von den GPS-Empfänger (3) empfangenen Geschwindigkeits- und Standortinformationen in einer Datenbank zu speichern; und wobei
- die Kommunikationsvorrichtung (2) eine SIM-Karte aufweist, auf der elektronische Signaturschlüssel erzeugt werden, und wobei es sich bei der Vorrichtung vorzugsweise um ein Smartphone handelt;
- die Benutzeroberfläche (4) das Erzeugen elektronisch unterschriebener Daten ermöglicht, welche die Fahrgestellnummer, die Kennung des GPS-Empfängers (3), Standortinformationen des GPS-Empfängers (3), GSM-Zeitinformationen und eine Indikation enthalten, dass der Fahrer seine Fahrtätigkeit begonnen oder beendet hat;
- die GSM/GPRS-Einheit (5) die drahtlose Übermittlung der elektronisch unterschriebenen Daten zu dem Server (6) ermöglicht; und
- wobei der Server (6) die von den GPS-Empfänger (3) empfangenen Geschwindigkeits- und Standortinformationen mit den von der GSM/GPRS-Einheit (5) empfangenen Daten vergleicht, um die Datenintegrität zu verifizieren und die Lenkzeiten unter Verwendung der verifizierten Informationen zu verfolgen.

2. Verfahren zur Verfolgung von Lenkzeiten online mit einer elektronischen Signatur (100), welches eine Kontrolle der maximalen Lenkzeiten und der Mindestruhezeiten, die Fahrer, beim Transport auf der Straße einhalten müssen, unter Verwendung einer elektronischen Signaturtechnologie ermöglicht, die unter Verwendung des Systems nach Anspruch 1 eine Authentifizierung von Fahrern bereitstellt und Datenintegrität gewährleistet, wobei das Verfahren durch die folgenden Schritte gekennzeichnet ist:
- Anmelden an dem Server (6) vor einer Fahrt unter Verwendung einer elektronischen Signatur über die Benutzeroberfläche (4) (101);
- Verifizieren der von dem Server (6) empfangenen elektronisch unterschriebenen Daten zu Beginn einer Fahrt (102), wobei die elektronisch unterschriebenen Daten die Fahrgestellnummer, die Kennung des GPS-Empfängers (3), Standortinformationen des GPS-Empfängers (3), GSM-Zeitinformationen und eine Indikation enthalten, dass der Fahrer seine Fahrtätigkeit begonnen oder beendet hat;
- durch den Server (6), Kontrollieren der Informationsquelle während der Fahrt, umfassend von dem GPS-Empfänger (3) in regelmäßigen Intervallen empfangene Geschwindigkeits- und Standortinformationen, und Speichern dieser in einer Datenbank (103);
- Senden elektronisch unterschriebener Abmeldedaten an den Server (6) am Ende der Fahrtätigkeit und Abmelden aus dem Fahrprotokollierungssystem nach Verifizierung der elektronisch unterschriebenen Daten an dem Server (104); und
- durch den Server (6), Bestätigen der von dem GPS-Empfänger (3) empfangenen Geschwindigkeits- und Standortinformationen mit den von der GSM/GPRS-Einheit (5) der Kommunikationsvorrichtung (2) empfangenen Informationen, um die Datenintegrität zu verifizieren und um die Lenkzeiten unter Verwendung der verifizierten Informationen (105) zu verfolgen.

3. System zur Verfolgung von Lenkzeiten online mit einer elektronischen Signatur (1) nach Anspruch 1, wobei der Server (6) eine Verifizierung des Zertifikats der elektronischen Signatur sowie eine Überwachung auf einen Widerruf des Zertifikats durchführt.

4. System zur Verfolgung von Lenkzeiten online mit einer elektronischen Signatur (1) nach Anspruch 1, wobei der der GPS-Empfänger (3), sobald die Fahraktivität beginnt, die Standortinformationen, die er regelmäßig von dem GPS-Satelliten (G) empfängt, sowie die Geschwindigkeitsinformationen, die er durch Berechnung der Veränderung seines Standorts im Verhältnis zur Zeit erhält, über die GSM/GPRS-Einheit (5) drahtlos an den Server (6) übermitteln kann.

5. System zur Verfolgung von Lenkzeiten online mit einer elektronischen Signatur (1) nach Anspruch 1, wobei die kryptografischen Aktualisierungen dadurch, dass diese online zur Verfügung stehen, einfach von dem Server (6) heruntergeladen werden können.

6. System zur Verfolgung von Lenkzeiten online mit einer elektronischen Signatur (1) nach Anspruch 1, wobei der Server (6) die Standortinformationen durch einen Vergleich der von dem GPS-Empfänger (3) empfangenen Standortdaten mit den von der GSM/GPRS-Einheit (5) der Kommunikationsvorrichtung (2) empfangenen Standortdaten bestätigt.

## Revendications

1. Système de suivi des heures de conduite en ligne avec signature électronique (1), qui permet de contrôler les heures de conduite maximales et les périodes de repos minimales que les conducteurs doivent respecter dans le transport routier à l'aide d'une technologie de signature électronique permettant l'authentification de conducteur et garantissant l'intégrité des données, comprenant
- au moins un dispositif de communication (2) ayant une interface utilisateur (4) qui est conçue pour permettre à l'utilisateur de se connecter et de se déconnecter du système,
- au moins un récepteur GPS (3) qui est de préférence fourni dans le véhicule ou dans le dispositif de communication (2) et qui est conçu pour communiquer avec le satellite GPS et obtenir les informations de vitesse et de localisation du véhicule,
- au moins une unité GSM/GPRS (5) qui est fournie dans le dispositif de communication (2) et le récepteur GPS (3) et qui permet la transmission sans fil des informations de vitesse et de localisation obtenues au moyen du récepteur GPS (3) à intervalles réguliers,
- au moins un serveur (6) qui permet de sauvegarder les informations de vitesse et de localisation reçues des récepteurs GPS (3) dans une base de données et
- le dispositif de communication (2) ayant une carte SIM sur laquelle sont créées des clés de signature électronique et étant de préférence un smartphone,
- l'interface utilisateur (4) permettant de créer des données signées électroniquement qui contiennent le numéro d'identification du véhicule, l'identification du récepteur GPS (3), les informations de localisation du récepteur GPS (3), les informations horaires du GSM et l'indication que le conducteur a commencé ou terminé son activité de conduite,
- l'unité GSM/GPRS (5) permettant la transmission sans fil des données signées électroniquement vers le serveur (6), et
- le serveur (6) comparant les informations de vitesse et de localisation reçues des récepteurs GPS (3) avec les données reçues de l'unité GSM/GPRS (5) pour vérifier l'intégrité des données et suivre les temps de conduite à l'aide des informations vérifiées.

2. Procédé de suivi des heures de conduite en ligne avec signature électronique (100), qui permet de contrôler les heures de conduite maximales et les périodes de repos minimales que les conducteurs devraient respecter dans le transport routier en employant une technologie de signature électronique permettant l'authentification du conducteur et garantissant l'intégrité des données à l'aide du système selon la revendication 1, **caractérisé par** les étapes consistant à
- se connecter au serveur (6) avant de conduire à l'aide de la signature électronique par l'intermédiaire de l'interface utilisateur (4) (101),
- vérifier les données signées électroniquement reçues par le serveur (6) au début de la conduite (102), les données signées électroniquement contenant le numéro d'identification du véhicule, l'identification du récepteur GPS (3), les informations de localisation du récepteur GPS (3), les informations horaires du GSM et l'indication que le conducteur a commencé à conduire,
- contrôler par le serveur (6), pendant la conduite, la source des informations comprenant les informations de localisation et de vitesse reçues du récepteur GPS (3) à intervalles réguliers et les enregistrer dans une base de données (103),
- envoyer des données de déconnexion signées électroniquement au serveur (6) à la fin de l'activité de conduite et se déconnecter du système de journal de conduite après vérification des données signées électroniquement sur le serveur (104), et
- corroborer par le serveur (6) les informations de localisation et de vitesse reçues du récepteur GPS (3) avec les informations reçues de l'unité GSM/GPRS (5) du dispositif de communication (2) pour vérifier l'intégrité des données et suivre les temps de conduite à l'aide d'informations vérifiées (105).

3. Système de suivi des heures de conduite en ligne avec signature électronique (1) selon la revendication 1, le serveur (6) effectuant la vérification du certificat de signature électronique et le contrôle de révocation de certificat.

4. Système de suivi en ligne des heures de conduite avec signature électronique (1) selon la revendication 1, le récepteur GPS (3) étant conçu pour transmettre sans fil, dès le début de l'activité de conduite, les informations de localisation, qu'il reçoit régulièrement du satellite GPS (G), et les informations de vitesse, qu'il obtient en calculant le changement de sa localisation par rapport au temps au serveur (6) par l'intermédiaire de l'unité GSM/GPRS (5).

5. Système de suivi des heures de conduite en ligne avec signature électronique (1) selon la revendication 1, les mises à jour cryptographiques pouvant être facilement téléchargées à partir du serveur (6) grâce au fait d'être en ligne.

6. Système de suivi des heures de conduite en ligne avec signature électronique (1) selon la revendication 1, le serveur (6) corroborant les informations de localisation en comparant les données de localisation reçues du récepteur GPS (3) avec les données de localisation reçues de l'unité GSM/GPRS (5) du dispositif de communication (2).
